# EUROPEAN PATENT SPECIFICATION

(11) **EP 4 553 325 B1**
(45) Date of publication and mention of the grant of the patent: **25.03.2026**
(21) Application number: 24210471.9
(22) Date of filing: 04.11.2024
(51) Int. Cl.: F16B 2/22, B60H 1/00, F16B 7/22, F16B 21/07, F16B 21/08

(54) **ASSEMBLY COMPRISING A ROTATING UNIT AND A SUPPORT, WITH A HOOKING LEVER FOR AXIAL BACKLASH RECOVERY**
ANORDNUNG MIT EINER DREHEINHEIT UND EINEM TRÄGER MIT EINEM HAKENHEBEL ZUR AXIALEN SPIELRÜCKSTELLUNG
ENSEMBLE COMPRENANT UNE UNITÉ ROTATIVE ET UN SUPPORT, AVEC UN LEVIER D'ACCROCHAGE POUR REPRISE EN RATTRAPAGE DE JEU AXIAL

(30) Priority: 07.11.2023 IT 202300023352
(43) Date of publication of application: 14.05.2025
(73) Proprietor: DENSO THERMAL SYSTEMS S.p.A., 10046 Poirino (Torino) (IT)
(72) Inventor: BORGHI, Antonello, I-10046 POIRINO (Torino) (IT); DESOGUS, Alessandro, I-10046 POIRINO (Torino) (IT)
(74) Representative: Vanzini, Christian

(56) References cited:
- EP-A1- 0 644 073
- EP-A2- 1 216 862
- FR-A7- 2 420 280
- JP-A- S60 161 212

## Description

The present invention generally relates to techniques for assembling plastic components. The document JP S60 161212 A shows an assembly of the prior art.

It is known to create assemblies comprising a rotating unit and a support, wherein the rotating unit comprises a rotating element arranged on one side of the support and provided with a shaft inserted into a hole formed in the support, and a coupling part frontally engaged on an end of the shaft arranged on the opposite side of the support and configured to be coupled to a device for controlling the rotating element.

The axial position of the rotating element is ensured when, on the opposite side relatively to where the coupling part is engaged, there is a counterforce that prevents or limits the axial movement of the rotating element during assembly. If this counterforce is not present, engagement cannot be guaranteed, or to achieve it, large axial backlash must be accepted.

An object of the present invention is to provide a solution to this problem.

To achieve this object, the invention relates to an assembly comprising a rotating unit and a support, wherein the rotating unit comprises a rotating element arranged on one side of the support and provided with a shaft inserted in a hole formed in the support, and a hooking lever mounted on an end of the shaft arranged on the opposite side of the support,
wherein the hooking lever comprises:
a first lever part frontally mounted onto the end of the shaft and provided with a first clip configured to snap on a first hooking seat formed on the end of the shaft, and
a second lever part hinged to the first lever part and rotatable around a tangential hinging axis, between an initial mounting position and a final mounting position,
wherein the second lever part is provided with a second clip configured to snap on, in said final mounting position, a second hooking seat formed on the first lever part,
wherein the second lever part is provided with a cam profile configured to engage a surface of the support during rotation from the initial mounting position to the final mounting position, so as to raise the hooking lever and the shaft with respect to said surface of the support, recovering any axial backlash between the rotating element and the support, and
wherein the second lever part is provided with a force transmission portion configured to be coupled to a device for controlling the rotating element, said force transmission portion being arranged, in said final mounting position, coaxially with the shaft of the rotating element.

According to the invention, an assembly is thus achieved making it possible to recover the axial backlash of the rotating element, thanks to the action of the cam profile formed on the hooking lever. It is therefore possible to achieve an axial positioning of the rotating unit with relatively narrow tolerances.

Further features and advantages of the assembly according to the invention will become clearer in the following detailed description of an embodiment of the invention, with reference to the accompanying drawings, provided purely by way of illustration and not limitation, wherein
Figures 1 and 2 are exploded views of the assembly according to the invention;
Figures 3 and 4 are, respectively, an exploded view and a perspective view of a rotating unit of the assembly shown in Figures 1 and 2,
Figures 5 and 6 are, respectively, a perspective view and a sectional view of the assembly in an initial mounting position; and
Figures 7 and 8 are, respectively, a perspective view and a sectional view of the assembly in a final mounting position.

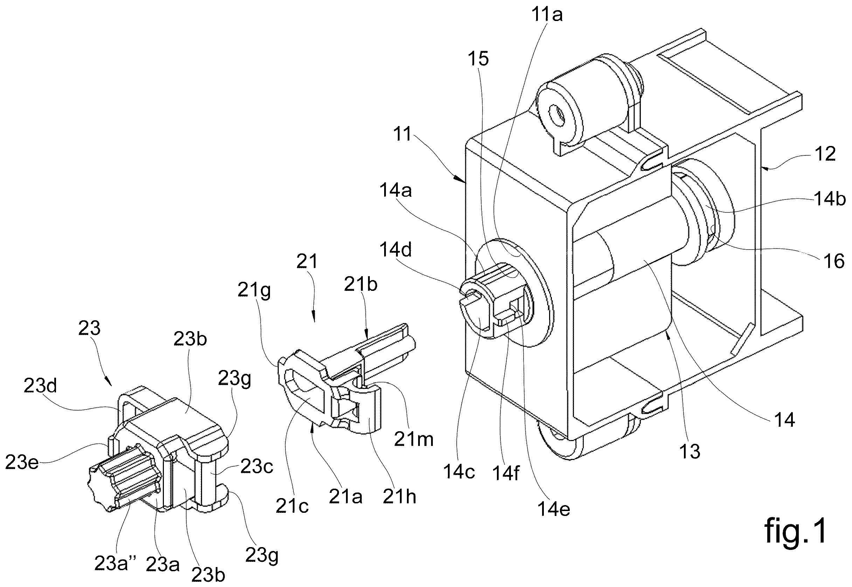

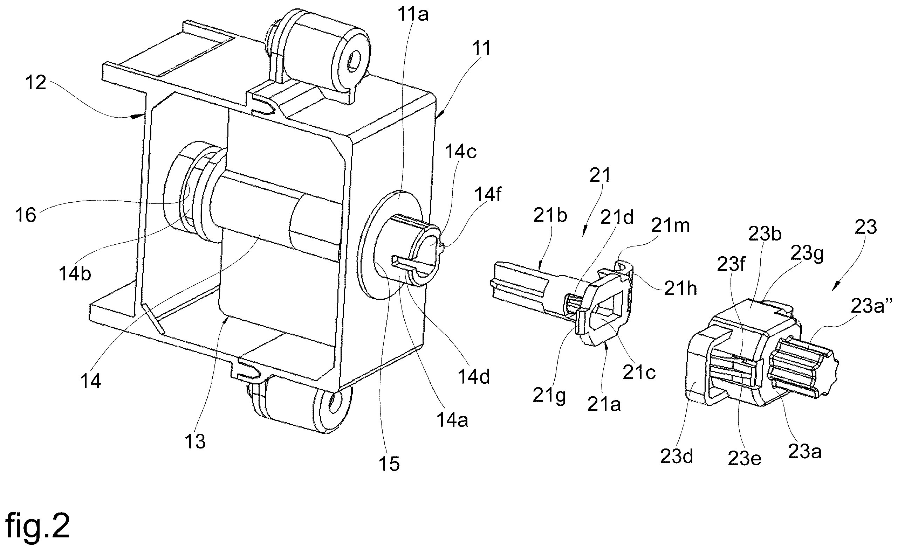

Figures 1-2 and 5-8 show a first wall and a second wall made of plastic material, respectively denoted by 11 and 12. These walls 11, 12 may be part, for example, of a housing of an air conditioning control unit for a vehicle. Between the walls 11, 12 is arranged a rotating unit 13 made of plastic material, for example a door. The rotating element 13 is provided with a shaft 14, having opposite ends 14a, 14b inserted into respective holes 15, 16 formed in the first wall 11 and the second wall 12 respectively. The end 14a of shaft 14, coupled with the hole 15 formed through the first wall 11, protrudes beyond the other side of the first wall 11 relatively to where the rotating unit 13 is positioned. The coupling of shaft 14 with holes 15, 16 defines a rotation axis of the rotating unit 13 with respect to walls 11, 12.

The arrangement described above is not essential to the invention, as the shaft 14 can be coupled with only one wall corresponding to the first wall 11 described above. This wall/first wall will hereafter be generically referred to as the "support."

The rotating element 13 is thus arranged on one side of the support 11, while the end 14a of the shaft 14 of the rotating element 13 is arranged on the opposite side of the support 11.

On the end 14a of the shaft 14, an axially extending cavity 14c having a non-circular cross-section is frontally formed. In this description, "axial direction" refers to a direction parallel to the rotation axis / extension axis y of the shaft 14 of the rotating element 13. An axially extending slit 14d is formed on a wall delimiting cavity 14c. On the same wall, but in a diametrically opposite position, a window 14e and a rib 14f axially adjacent to window 14e are formed. The window 14e defines a first hooking seat for mounting a component, as will be made clearer herein below.

A hooking lever 20 made of plastic material is mounted on the end 14a of the shaft 14. The hooking lever 10 allows to couple the rotating unit 13 with a control device not shown, which may be, for example, an actuator or a transmission mechanism connected to an actuator.

In the illustrated example, the hooking lever 20 comprises two separate elements assembled to each other in the manner that will be described below. In an alternative embodiment not illustrated, the hooking lever 20 could be made up of a single body, with two portions connected to each other by a film hinge. In the following description, the terms "first lever part" and "second lever part" will be used to denotate the two components of the hooking lever 20, regardless of whether these components are assembled together or are part of a single body.

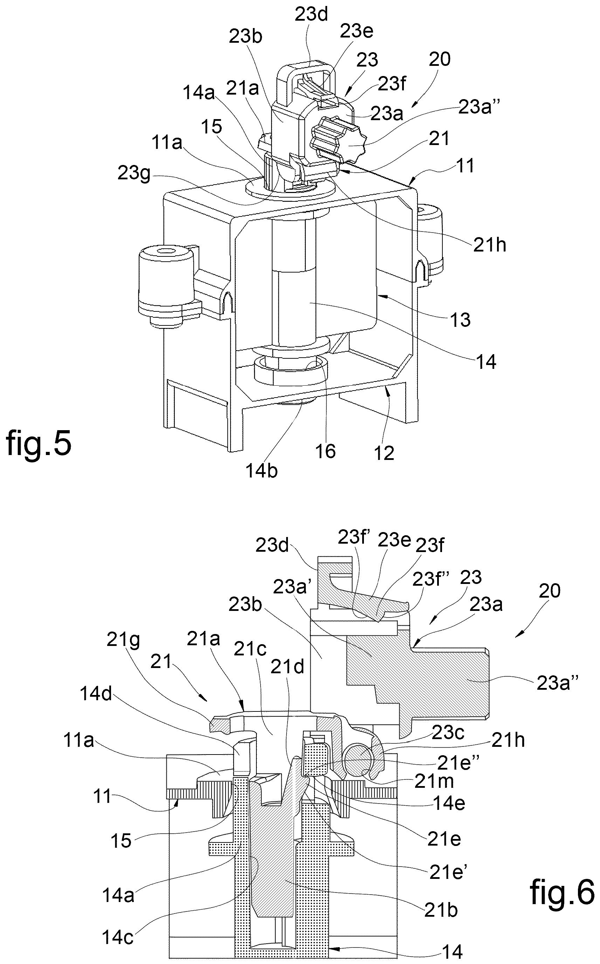

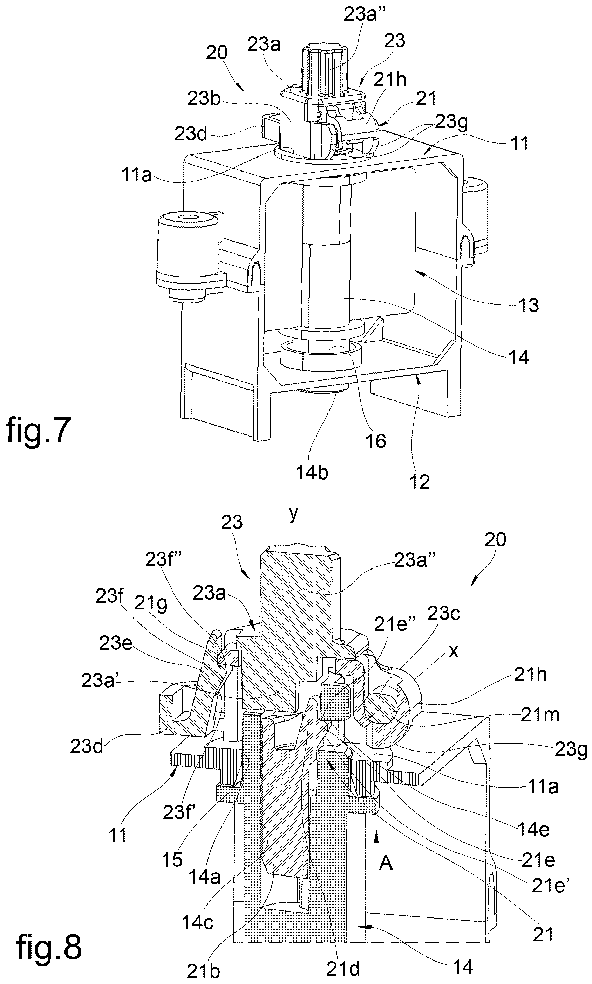

The hooking lever 20 thus comprises a first lever part 21 frontally mounted on the end 14a of shaft 14. The first lever part 21 comprises a head 21a and a stem 21b configured to be inserted into the cavity 14c of shaft 14. Through the head 21a, a cavity 21c is frontally formed, extending axially to a portion of the stem 21b adjacent to the head 21a. In the cavity 21c a first clip 21d is arranged, which extends axially from the stem 21b towards the head 21a. The first clip 21d is provided with a tooth 21e, which is shaped to have a ramp surface 21e' facing towards the tip of the stem 21b, and a step 21e" facing towards the head 21. The first clip 21d is configured to snap on the first hooking seat 14e formed on the end 14a of the shaft 14, as shown in Figures 6 and 8.

On the head 21a of the first lever part 21, a transversely extending tab 21g is formed, defining a second hooking seat for mounting a component, as will be made clearer herein below.

In a diametrically opposite position, a fork appendage 21h with a recess 21m is formed on the head 21a.

The hooking lever 20 comprises a second lever part 23 in the shape of a cap. The second lever part 23 comprises a central portion 23a, which in turn comprises a bottom portion 23a' configured to fit into the cavity 21c of the first lever part 21, and a top force transmission portion 23a" configured to be coupled with the control device of the rotating unit 13. In the illustrated example, the top force transmission portion 23a" is shaped like a male element intended to couple with a female seat formed on the output shaft of an actuator. Conversely, the top force transmission portion 23a" could be shaped with a female seat intended to couple with a male element formed on the output shaft of an actuator. More generally, the top force transmission portion 23a" could have any shape capable of achieving a force transmission coupling with an external control device, whether this is an actuator or a transmission mechanism. For example, the top force transmission portion 23a" could have teeth for coupling with gears, or it could have protrusions or recesses intended to couple with levers, cams, or tie rods.

The second lever part 23 also comprises two side wings 23b extending axially from the central portion 23a on opposite sides of the bottom portion 23a' of the latter.

The side wings 23b of the second lever part 23 are connected to each other by a pivot portion 23c. This pivot portion 23c can be coupled with the recess 21m of the fork appendage 21h to define a tangential hinging axis x, around which the second lever part 23 can rotate with respect to the first lever part 21, between an initial mounting position (shown in Figures 5 and 6) and a final mounting position (shown in Figures 7 and 8). Preferably, the pivot portion 23c has an oblong cross-section, to facilitate mounting of the pivot portion 23c in the recess 21m, and to prevent accidental disengagement of the pivot portion 23c from the recess 21m when the second lever part 23 is in the final mounting position. According to an embodiment not illustrated, the first lever part 21 and the second lever part 23 could form a single body in which the first lever part 21 and the second lever part 23 are connected to each other by a film hinge.

In a diametrically opposite position to the tangential hinging axis x, the side wings 23b of the second lever part 23 are connected to each other by a connecting portion 23d. On the connecting portion 23d, a second clip 23e is formed, extending axially towards the top side of the second lever part 23. The second clip 23e is provided with a tooth 23f, which is shaped to have a ramp surface 23f' facing towards the bottom side of the second lever part 23, and a step 23f" facing towards the top side of the second lever part 23. The second clip 23e is configured to snap on the second hooking seat 21g formed on the head 21a of the first lever part 21, as shown in Figure 8.

Each of the side wings 23b of the second lever part 23 is provided with a cam profile 23g arranged near the pivot connection portion 23c. In the embodiment wherein the first lever part and the second lever part are connected by a film hinge, the cam profile would be arranged near the hinging axis defined by the film hinge. In any case, the cam profile 23g is configured to engage a surface 11a of the support 11 during a rotation of the second lever part 23 from the initial mounting position to the final mounting position, so as to raise the hooking lever 20 and the shaft 14 with respect to the surface 11a of the support 11 (this raising is represented by arrow A in Figure 8).

The mounting of the above-described assembly is carried out as follows.

The second lever part 23 is assembled to the first lever part 21 by inserting the pivot portion 23c of the second lever part 23 into the recess 21m formed in the fork appendage 21h of the head 21a of the first lever part 21. In the embodiment wherein the first lever part and the second lever part are connected by a film hinge, this assembly step would be absent.

The hooking lever 20 (formed by the first lever part 21 and the second lever part 23) is then mounted on the end 14a of the shaft 14 of the rotating unit 13, which has been preliminarily coupled to the support 11.

In this mounting operation, the stem 21b of the hooking lever 20 is frontally inserted into the cavity 14c of the shaft 14, until the first clip 21d of the hooking lever 20 snaps into the first hooking seat 14e of the shaft 14. In this way, the initial mounting position shown in Figures 5 and 6 is reached.

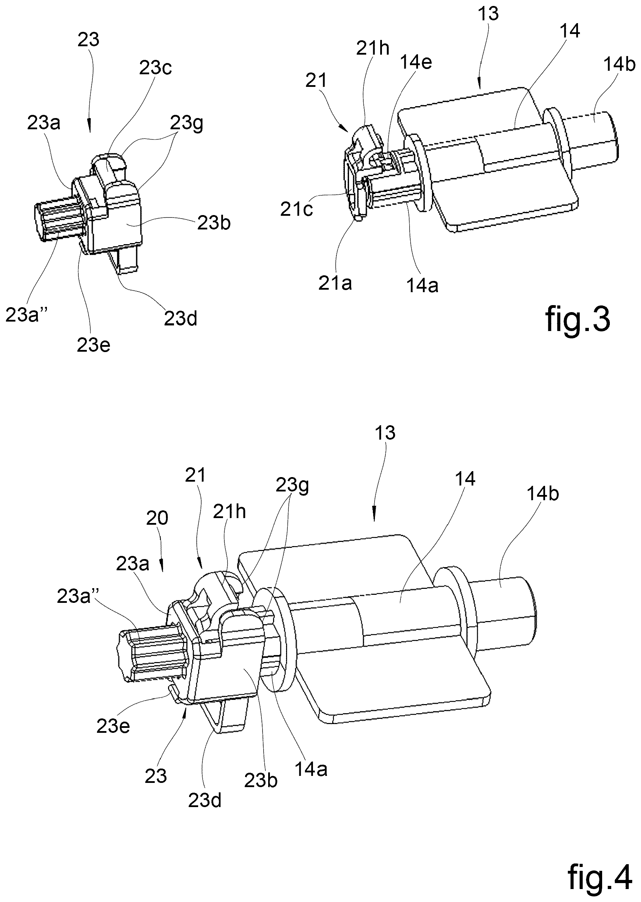

From this position, the second lever part 23 is rotated around its tangential hinging axis x, until the second clip 23e of the second lever part 23 snaps into the second hooking seat 21g of the first lever part 21. In this way, the final mounting position shown in Figures 7 and 8 is reached (in Figures 3 and 4, only the rotating unit formed by the rotating element 13 and the hooking lever 20 is shown). During the rotation from the initial mounting position to the final mounting position, the cam profile 23g of the second lever part 23 engages the surface 11a of the support 11, causing the lifting of the hooking lever 20, and thus of the shaft 14 to which the hooking lever is anchored, relative to the surface 11a of the support 11. In this way, the axial backlash present between the support 11 and the rotating element 13 is recovered.

In the final mounting position, the bottom portion 23a' of the central portion 23a of the second lever part 23 is inserted into the cavity 21c of the first lever part 21, and the top force transmission portion 23a" reaches a position in which the top force transmission portion 23a" is coaxial with the shaft 14 of the rotating element 13.

In this way, the rotating element 13 can be coupled to the related control device, via the top force transmission portion 23a".

## Claims

1. An assembly comprising a rotating unit (13, 20) and a support (11), wherein the rotating unit comprises a rotating element (13) arranged on one side of the support (11) and provided with a shaft (14) inserted in a hole (15) formed in the support (11), and a hooking lever (20) mounted on an end (14a) of the shaft (14) arranged on the opposite side of the support (11),
**characterized in that** the hooking lever (20) comprises:
a first lever part (21) frontally mounted on the end (14a) of the shaft (14) and provided with a first clip (21d) configured to snap on a first hooking seat (14e) formed on the end (14a) of the shaft (14), and
a second lever part (23) hinged to the first lever part (21) and rotatable about a tangential hinging axis (x), between an initial mounting position and a final mounting position,
wherein the second lever part (23) is provided with a second clip (23e) configured to snap on, in said final mounting position, a second hooking seat (21g) formed on the first lever part (21),
wherein the second lever part (23) is provided with a cam profile (23g) configured to engage a surface (11a) of the support (11) during a rotation of the second lever part (23) from the initial mounting position to the final mounting position, so as to raise the hooking lever (20) and the shaft (14) with respect to said surface (11a) of the support (11), recovering axial backlash between the rotating element (13) and the support (11), and
wherein the second lever part (23) is provided with a force transmission portion (23a") configured to be coupled to a device for controlling the rotating element (13), said force transmission portion (23a") being arranged, in said final mounting position, coaxially with the shaft (14) of the rotating element (13).

2. The assembly according to claim 1, wherein a cavity (14c) extending in an axial direction is frontally formed on the end (14a) of the shaft (14), and wherein the first lever part (21) comprises a head (21a) and a stem (21b) extending from the head (21a) and configured to be inserted into the cavity (14c) of the shaft (14).

3. The assembly according to claim 2, wherein the second hooking seat (21g) is formed on the head (21a) of the first lever part (21), and the first clip (21d) is formed on the stem (21b) of the first lever part (21).

4. The assembly according to claim 1 or 2, wherein the first hooking seat (14e) is defined by a window formed in a wall delimiting the cavity (14c) of the shaft (14).

5. The assembly according to any of the preceding claims, wherein the second lever part (23) comprises a central portion (23a) and two side wings (23b) extending axially from the central portion (23a).

6. The assembly according to claim 5, wherein the central portion (23a) of the second lever part (23) comprises a bottom portion (23a') configured to fit into a cavity (21c) formed in the first lever part (21), and on top of the bottom portion (23a') it comprises said force transmission portion (23a").

7. The assembly according to claim 6, wherein the side wings (23b) of the second lever part (23) are connected to each other by a connecting portion (23d), said second clip (23e) being formed on the connecting portion (23d).

8. The assembly according to any one of claims 5 to 7, wherein the side wings (23b) of the second lever part (23) are connected to each other by a pivot portion (23c) arranged in a position diametrically opposite to the second clip (23e), said pivot portion (23c) being coupled to a fork appendage (21h) of the first lever part (21) to define said tangential hinging axis (x).

9. The assembly according to any of claims 1 to 7, wherein the first lever part (21) and the second lever part (23) are connected to each other by a film hinge arranged in a position diametrically opposite to the second clip (23e).

## Patentansprüche

1. Anordnung umfassend eine Dreheinheit (13, 20) und einem Träger (11), wobei die Dreheinheit ein Drehelement (13) umfasst, das auf einer Seite des Trägers (11) angeordnet ist und mit einer Welle (14) versehen ist, die in eine Bohrung (15), die in dem Träger (11) ausgebildet ist, eingesetzt wird, und einen Hakenhebel (20), der an einem Ende (14a) der Welle (14) eingebaut wird, das auf der gegenüberliegenden Seite des Trägers (11) angeordnet ist,
**dadurch gekennzeichnet, dass** der Hakenhebel (20) umfasst:
einen ersten Hebelteil (21), der frontseitig an dem Ende (14a) der Welle (14) eingebaut wird und mit einem ersten Clip (21d) versehen ist, der dazu konfiguriert ist, in einen ersten Hakenaufnahmesitz (14e) einzurasten, der an dem Ende (14a) der Welle (14) ausgebildet ist, und
einen zweiten Hebelteil (23), der an dem ersten Hebelteil (21) scharniert wird und um eine tangentiale Scharnierachse (x) zwischen einer Anfangseinbauposition und einer Endeinbauposition drehbar ist,
wobei der zweite Hebelteil (23) mit einem zweiten Clip (23e) versehen ist, der dazu konfiguriert ist, in der Endeinbauposition in einen zweiten Hakenaufnahmesitz (21g) einzurasten, der an dem ersten Hebelteil (21) ausgebildet ist,
wobei der zweite Hebelteil (23) mit einem Nockenprofil (23g) versehen ist, das dazu konfiguriert ist, beim Drehen des zweiten Hebelteils (23) von der Anfangseinbauposition in die Endeinbauposition mit einer Fläche (11a) des Trägers (11) in Eingriff zu kommen, um den Hakenhebel (20) und die Welle (14) in Bezug auf die Fläche (11a) des Trägers (11) anzuheben und ein axiales Spiel zwischen dem Drehelement (13) und dem Träger (11) rückzustellen, und
wobei der zweite Hebelteil (23) mit einem Kraftübertragungsabschnitt (23a") versehen ist, der dazu konfiguriert ist, mit einer Vorrichtung zum Steuern des Drehelements (13) gekoppelt zu werden, wobei der Kraftübertragungsabschnitt (23a") in der Endeinbauposition koaxial zu der Welle (14) des Drehelements (13) angeordnet ist.

2. Anordnung nach Anspruch 1, wobei ein Hohlraum (14c), der sich in axialer Richtung erstreckt, frontseitig an dem Ende (14a) der Welle (14) ausgebildet ist und wobei der erste Hebelteil (21) einen Kopf (21a) und einen Schaft (21b) umfasst, der sich von dem Kopf (21a) erstreckt und dazu konfiguriert ist, in den Hohlraum (14c) der Welle (14) eingesetzt zu werden.

3. Anordnung nach Anspruch 2, wobei der zweite Hakenaufnahmesitz (21g) an dem Kopf (21a) des ersten Hebelteils (21) ausgebildet ist und der erste Clip (21d) an dem Schaft (21b) des ersten Hebelteils (21) ausgebildet ist.

4. Anordnung nach Anspruch 1 oder 2, wobei der erste Hakenaufnahmesitz (14e) durch ein Fenster definiert wird, das in einer Wand des Hohlraums (14c) der Welle (14) ausgebildet ist.

5. Anordnung nach einem der vorhergehenden Ansprüche, wobei der zweite Hebelteil (23) einen Mittelabschnitt (23a) und zwei seitliche Flügel (23b) umfasst, die sich axial von dem Mittelabschnitt (23a) erstrecken.

6. Anordnung nach Anspruch 5, wobei der Mittelabschnitt (23a) des zweiten Hebelteils (23) einen unteren Abschnitt (23a') umfasst, der dazu konfiguriert ist, in einen Hohlraum (21c) einzusetzen, der in dem ersten Hebelteil (21) ausgebildet ist, und wobei oberhalb des unteren Abschnitts (23a') er das Kraftübertragungsteil (23a") umfasst.

7. Anordnung nach Anspruch 6, wobei die seitlichen Flügel (23b) des zweiten Hebelteils (23) durch einen Verbindungsabschnitt (23d) miteinander verbunden sind, wobei der zweite Clip (23e) an dem Verbindungsabschnitt (23d) ausgebildet ist.

8. Anordnung nach einem der Ansprüche 5 bis 7, wobei die seitlichen Flügel (23b) des zweiten Hebelteils (23) durch einen Schwenkabschnitt (23c) miteinander verbunden sind, der diametral gegenüber dem zweiten Clip (23e) positioniert ist, wobei der Schwenkabschnitt (23c) mit einem gabelförmigen Vorsprung (21h) des ersten Hebelteils (21) gekoppelt ist, um die tangentiale Scharnierachse (x) zu definieren.

9. Anordnung nach einem der Ansprüche 1 bis 7, wobei der erste Hebelteil (21) und der zweite Hebelteil (23) durch ein Filmscharnier miteinander verbunden sind, das diametral gegenüber dem zweiten Clip (23e) positioniert ist.

## Revendications

1. Un ensemble comprenant une unité rotative (13, 20) et un support (11), dans lequel l'unité rotative comprend un élément rotatif (13) disposé d'un côté du support (11) et pourvu d'un arbre (14) inséré dans un trou (15) formé dans le support (11), et un levier d'accrochage (20) monté sur une extrémité (14a) de l'arbre (14) disposée du côté opposé du support (11),
**caractérisé en ce que** le levier d'accrochage (20) comprend :
une première partie de levier (21) montée frontalement sur l'extrémité (14a) de l'arbre (14) et pourvue d'un premier clip (21d) configuré pour s'enclencher dans un premier siège d'accrochage (14e) formé sur l'extrémité (14a) de l'arbre (14), et
une seconde partie de levier (23) articulée à la première partie de levier (21) et rotative autour d'un axe d'articulation tangent (x), entre une position de montage initiale et une position de montage finale,
dans laquelle la seconde partie de levier (23) est pourvue d'un second clip (23e) configuré pour s'enclencher, dans ladite position de montage finale, dans un second siège d'accrochage (21g) formé sur la première partie de levier (21),
dans laquelle la seconde partie de levier (23) est pourvue d'un profil de came (23g) configuré pour entrer en contact avec une surface (11a) du support (11) lors d'une rotation de la seconde partie de levier (23) depuis la position de montage initiale vers la position de montage finale, de manière à soulever le levier d'accrochage (20) et l'arbre (14) par rapport à ladite surface (11a) du support (11), en compensant un jeu axial entre l'élément rotatif (13) et le support (11), et
dans laquelle la seconde partie de levier (23) est pourvue d'une portion de transmission de force (23a") configurée pour être couplée à un dispositif de commande de l'élément rotatif (13), ladite portion de transmission de force (23a") étant disposée, dans ladite position de montage finale, coaxialement à l'arbre (14) de l'élément rotatif (13).

2. L'ensemble selon la revendication 1, dans lequel une cavité (14c) s'étendant dans une direction axiale est formée frontalement sur l'extrémité (14a) de l'arbre (14), et dans lequel la première partie de levier (21) comprend une tête (21a) et une tige (21b) s'étendant depuis la tête (21a) et configurée pour être insérée dans la cavité (14c) de l'arbre (14).

3. L'ensemble selon la revendication 2, dans lequel le second siège d'accrochage (21g) est formé sur la tête (21a) de la première partie de levier (21), et le premier clip (21d) est formé sur la tige (21b) de la première partie de levier (21).

4. L'ensemble selon la revendication 1 ou 2, dans lequel le premier siège d'accrochage (14e) est défini par une fenêtre formée dans une paroi délimitant la cavité (14c) de l'arbre (14).

5. L'ensemble selon l'une quelconque des revendications précédentes, dans lequel la seconde partie de levier (23) comprend une portion centrale (23a) et deux ailes latérales (23b) s'étendant axialement depuis la portion centrale (23a).

6. L'ensemble selon la revendication 5, dans lequel la portion centrale (23a) de la seconde partie de levier (23) comprend une portion inférieure (23a') configurée pour s'insérer dans une cavité (21c) formée dans la première partie de levier (21), et au-dessus de la portion inférieure (23a') elle comprend ladite portion de transmission de force (23a").

7. L'ensemble selon la revendication 6, dans lequel les ailes latérales (23b) de la seconde partie de levier (23) sont reliées entre elles par une portion de connexion (23d), ledit second clip (23e) étant formé sur la portion de connexion (23d).

8. L'ensemble selon l'une quelconque des revendications 5 à 7, dans lequel les ailes latérales (23b) de la seconde partie de levier (23) sont reliées entre elles par une portion de pivot (23c) disposée dans une position diamétralement opposée au second clip (23e), ladite portion de pivot (23c) étant couplée à une appendice en fourche (21h) de la première partie de levier (21) pour définir ledit axe d'articulation tangent (x).

9. L'ensemble selon l'une quelconque des revendications 1 à 7, dans lequel la première partie de levier (21) et la seconde partie de levier (23) sont reliées entre elles par une charnière à film disposée dans une position diamétralement opposée au second clip (23e).
